# EUROPEAN PATENT SPECIFICATION

(11) **EP 0 593 493 B1**
(45) Date of publication and mention of the grant of the patent: **18.10.1995**
(21) Application number: 92908868.0
(22) Date of filing: 12.03.1992
(51) Int. Cl.: C09C 1/00, C09C 1/28, C09C 1/30, C09C 3/00, C09C 3/06

(54) **COMPOSITE PIGMENT AND METHOD FOR THE PRODUCTION**
ZUSAMMENGESETZTES PIGMENT UND HERSTELLUNGSVERFAHREN
PIGMENT COMPOSITE ET PROCEDE DE FABRICATION

(30) Priority: 03.06.1991 SE 9101678
(43) Date of publication of application: 27.04.1994
(73) Proprietor: KompoPigment Ltd., Gibraltar (GI)
(72) Inventor: OTTERSTEDT, Jan-Erik, S-445 34 Bohus (SE); OTTERSTEDT, Orvar, Erik, S-411 39 Göteborg (SE); STERTE, Per, Johan, S-445 36 Bohus (SE)
(74) Representative: Kristiansen, Alf P.
(86) International application number: SE9200153
(87) International publication number: WO9221726

(56) References cited:
- EP-A- 0 266 247
- US-A- 4 565 581

## Description

### TECHNICAL FIELD:

The present invention relates to an improved, washproof pigment and a method for the production of such pigments.

### PRIOR ART:

Dry Color Manufacturing Association, DCMA (U.S.A.), defines a pigment as a coloured white, black or fluorescing organic or inorganic solid agent in the form of particles which usually are insoluble in and substantially physically and chemically unaffected of the medium or the substrate in which it has been included. A pigment changes the appearance of a material by selective absorption of and/or by spreading the light. The pigment is usually dispersed in a carrier or a substrate when it is used at for instance production of colours, varnishes, plastics or other polymers. The pigment maintains its own unique particle shaped structure during the whole incorporation process.

The physical and chemical properties which control and define the performance of a commercial pigment in a substrate system include its chemical composition, chemical and physical stability, solubility, particle size and shape, degree of dispersion or aggregation, refraction index, density, absorption in the visible ultra violet and infrared areas of the light spectra, extinctions coefficients, specific surface, the appearance of the surface and the presence of impurities.

The pigment is mainly produced by precipitation and crystallization in water solutions. To obtain the desired particle size the pigment must usually be ground, screened and sifted. To obtain the highest possible brilliance and lustre impurities should be thoroughly washed out. For some organic pigments this means very complicated processes which require production times of many weeks, even several months.

A method for the production of cheap pigments, primarily for wall- and so called lime colours includes precipitation of a basic, cationic colorant on the surface of silicates and aluminium silicates, for example kaolin, zeolites and permutate; DRP 407618, 415203, 416462, 416463, 429484, 472975 and BP 462968. The process for the production of these kind of pigments includes making a dough of the substrate, for instance kaolin clay and some water, spraying on an acid solution, usually acetic acid of the colorant, stirring vigorously and drying the colour directly thereafter.

The main function of the pigment is to colour such end products as ink and colour, plastic products and synthetic fibres. Organic pigments are usually the most expensive component in the system and it is obvious that one would try to expose the highest colour value of the pigment in different fields of use.

Organic pigments which usually are crystalline are of a molecular size when they are formed by precipitation in a water solution but the molecules grow rapidly to crystals. Pigment crystals which are formed very close to other crystals attract each other and form aggregates. The crystals in the aggregates are kept together by van der Waals forces, which have the highest strength at a distance of less than 1 meter. Further treatment makes agglomerates which are large accumulations (even flocculates) of the primary pigment particles, that means crystals and aggregates of crystals.

It is well known within the field that the colour intensity of a pigment increases by further grinding. One is therefore of the opinion that a colour intensity of a pigment increases when the particle size decreases. It has however been shown that for certain pigments the colour intensity reaches a maximum and decreases thereafter with decreasing particle size. To obtain the highest possible colour value of a pigment it is therefore necessary to disperse the pigment particles so that the dispersion mainly consists of primary particles that i.e. crystals or aggregates of crystals having an optimal particle size which can vary with the colour tone and a minimum of loosely accumulated agglomerates or flocculates.

### THE TECHNICAL PROBLEM:

The above mentioned and other pigments can as such be satisfactory in many applications. They are however all very expensive to produce and many of them have the not desired property that they can be dissolved by washing. It has therefore always been a desire to be able to produce pigments cheaper or to be able to use them in very small doses still maintaining the wanted colouring and to be able to produce pigments which in all circumstances are washproof.

### THE SOLUTION:

By the present invention one has been able to set aside the disadvantages of the known pigments and brought about a pigment having a new type of structure, a composite pigment and a process for the production thereof according to the following claims 1-10.

One of the objects by the present invention has accordingly been to bring about a pigment having a high colour value at a low material cost. A further object with the present invention has been to bring about a pigment consisting of discrete particles having a main diameter in the area of 8 to 2.000 nm and a small particle size range within this area. Another object of the invention has been to make a pigment that can have the shape of balls, rods or plates. A still further object of the invention has been to make a pigment which does not bleed neither in water nor in organic solvents. Another object of the invention has been to bring about pigments the surface of which can be modified so that it is either hydrophile or organophile. A still further object of the invention has been to produce pigments dispersed in water having a solid content of up to 60 weight percent and to bring about a simple and cost effective process.

### DESCRIPTION OF FIGURES:

The invention will in the following be described more in detail in connection with the drawings where
- Fig. 1: shows in section a pigment particle according to the invention, and
- Fig. 2, 3, 4 and 5: show other embodiment examples of pigment particles according to the invention.

### PREFERRED EMBODIMENTS:

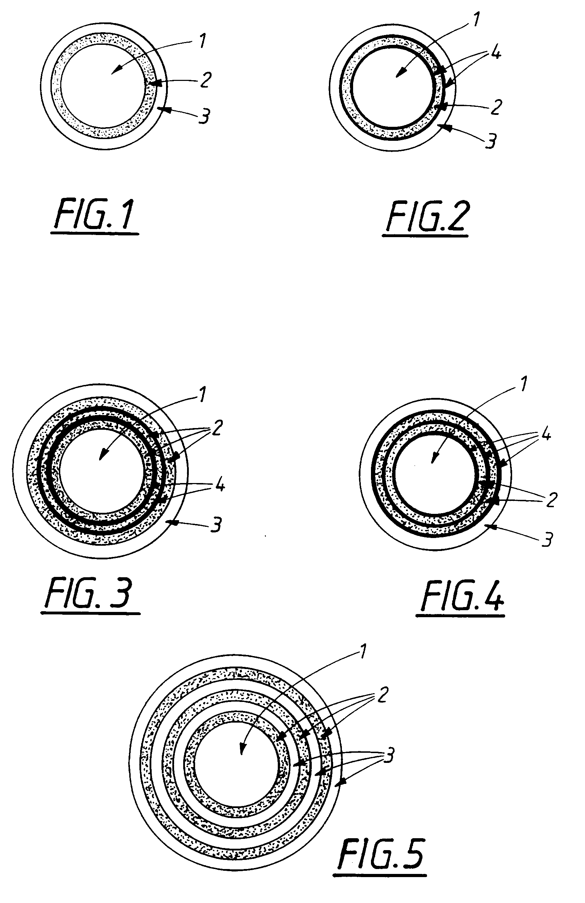

As appears Fig. 1 shows a ball shaped pigment particle according to the invention. This particle consists of an inner core 1 on which a layer 2 of a colorant has been deposited. On this layer of colorant 2 a film 3 has been deposited. The core consists in the present case of silica having a diameter less than 2000 nm. It can also consist of a polymer or another solid agent. The layer 2 of a colorant has usually a thickness of 0,5-5 nm and the film is approximately equally thick or thicker. The cores do not have to be spherical but can also be rod shaped, fibre formed or plate like. Even the film consists in the present case of amorphous silica.

Both the core, colorant layer and the protecting film will be further described below.

Fig. 2 shows a core 1 which has been covered by a layer 2, an anionic colorant upon which a film 3 of amorphous silica has been deposited. To improve the adsorption or the adherence a thin layer 4 of a positively charged agent for instance polymer cations of aluminium or chromium or a cationic water soluble polymer has been put between the core 1 and the colorant 2 and between the colorant 2 and the film 3.

Fig. 3 shows how a core 1 has been covered by a thick layer 2 of a colorant on which a film 3 of amorphous silica has been deposited. The thick layer 2 of colorant has been deposited by a multi step process. When a layer of colorant has been adsorbed the charge of its surface has been reversed with a negatively charged agent 4, for example silicate ions or an anionic water soluble polymer before the next layer of cationic colorant has been deposited.

Fig. 4 shows how a core 1 has been covered by a thick layer 2 of an anionic colorant upon which a film 3 of amorphous silica has been deposited. The adherence between the core 1 and the first layer 2 of anionic colorant has been improved by attaching a colorant at the core by means of a positively charged agent 4. The thick colorant layer has been made in a multistep process which means that the charge of the surface of the colorant has been reversed by a positively charged agent before the next layer of an anionic colorant has been deposited.

Fig. 5 shows how a pigment is built up by alternatively depositing layers 2 of a cationic colorant and films 3 of amorphous silica. The outermost layer of the pigment is a film 3 of amorphous silica having a thickness which is less than 25 nm. Films 3 of amorphous silica between the other layers may be thinner.

### The core

Cores according to the present invention are mainly solid material having such properties that they can be dispersed to particles having a colloidal size, that is < 2000 nm in water.

The cores should be solid agents consisting of inorganic or organic material which is insoluble in water. By the expression "insoluble in water" is meant that at most 0,1% of the material is soluble in water at 25°C.

Very suitable as cores according to the present invention are particles of silica, particles of silica the surface of which has been modified with aluminium so that strongly acid negatively charged aluminium silicates are formed in the surface and particles of aluminium silicate having a narrow particle size distribution centred in the area of < 2000 nm dispersed in water. Particles of silica dispersed in water, so called silica soles has a charge 0 at pH 1,8-2,0 which is the zero charge point of the silicic acid. The surface charge which is negative at pH > 2,0 increases monotonely in absolute values with increasing pH. The surface charge of particles having aluminium silicate seats in the surface increases also measured in absolute values with pH but has a substantial negative charge also at pH 2.

Other suitable cores of particles of polymers produced by emulsion polymerization having a narrow particle size distribution centred in the area of < 1000 nm dispersed in water . The dispersions of this kind is usually called polymer latexes as the particle size is in the area of 100-5000 nm. This kind of dispersions of polymer particles has been produced by emulgating monomers to ultra fine drops by means of an emulsifier. After the completion of the polymerization the emulsifiers are still attached to the surface of the polymer particles and they give these an electric charge which usually is negative.

Other cores which can be used according to the present invention are natural metal silicates such as different clays, for instance kaolin, bentonite, attapulgite and halloysite, natural rod shaped metal silicates such as chrysotile, asbestos, palygorskit, krokidolite and wollastonite. Even different fine particle shapes of more or less hydrated aluminium oxide such as pseudoböhmite and böhmite, can be used as cores according to the present invention.

The surface of the cores must be such that the particles can adsorb the colourants of different kinds to such extent that their surface can be completely covered. The surface charge of the cores are mostly negative and becomes more negative at increasing pH. If the adsorption of a certain colorant requires a positive charge on the surface of the core, this can be obtained by reversing the charge to positive by means of a positively charged agent. Suitable positively charged agents are water soluble cationic polymers, for instance polymers containing quarternary ammonium groups having high or medium high molecular weight, less than 100.000. Other suitable positively charged agents are basic salts of metals such as aluminium and chromium. Example of such basic salts are basic aluminium chloride, basic chromium chloride, basic chromium sulfate, basic aluminium acetate and basic aluminiumformate. If another type of colorant requires that the surface of the core is electrically neutral or for instance only weakly negatively charged for highest possible adsorption, this can be obtained by adjusting the pH to correspond to or lie slightly above the zero charge point for the surface of the core. By particles of silica as cores this means that pH shall be between 2 and 4. If a weakly positive charge is required on the surface of the particles for maximum adsorption, a way to obtain this is to adjust pH to slightly under the zero charge point of the surface.

### The colorant

Colourants are intensively coloured agents which are used to give colour to different substrates. The colour comes from chromophore groups in the molecules of the colorant. These chromophore groups can be used to classify the colourants. There are for instance azo colourants, antrakinon colourants, sulpha colourants, indigo colourants, triphenylmethane- and xanten colourants and phthalocyanine colourants.

Very suitable colourants according to the present invention are cationic water soluble colourants of the type azo, tiazolazo, antrachinone, tryarylmethane, metine, thiazine, oxazine, acridine and chinoline.

Other very suitable colourants are anionic water soluble colourants of the type azo, antrachinone, triarylmethane, azine, xanthene, ketone-imine, nitro, nitroso and chinoline.

Water solutions of cationic and anionic colourants have absorption spectra which depends on the content of the colorant. Spectra of diluted solutions show intensive absorption bands which are characteristic for the colorant in question. When the content of the colorant increases a new band at higher wave length is coming up which at higher concentrations becomes very intensive. The occurrence of this new band is caused by aggregates or micelles of colorant molecules which are formed when the concentration of colorant exceeds a certain critical value.

Cationic colourants form accordingly positively charged aggregates or micelles in water solutions. Anionic form in a corresponding way negatively charged aggregate or micelles in water solutions.

Adsorption of cationic or anionic colourants on surfaces having opposite charge can accordingly occur by having molecules of the colorant or aggregate micelles of colorant molecules adsorbed on the surface.

### Adsorption of colorant on the surface of the core

According to the present invention so much colour should be adsorbed on the surface of the core that the core is completely covered. To bring about this the best possible conditions must be created for a strong adsorption of the colorant molecules or aggregates of colorant molecules on the oppositely charged surface of the core.

To produce pigments according to the present invention starting from cationic colourants the surface of the cores should have a negative charge as high as possible. If one for instance as cores uses silica soles the adsorption of positively charge molecules or aggregates of colourants should occur at a pH where the surface of the silica particles has as high charge as possible. This means that pH should be slightly under or around pKₐ for silica which is 9,5-10. The charge of silica particles can also be increased at the same time as it is made less pH dependent by introducing strongly negative aluminium silica seats in the surface of the particles. Such aluminium silicate seats can be obtained by treating silica soles with a sodium aluminate solution so that up to 2 aluminium silicate seats can be formed per nm² of particle surface.

If one uses polymer particles as cores one should use such emulsifying agents at the production of the polymer particles that their surface receives a so high negative charge as possible.

When producing pigments according to the present invention starting from anionic colourants the surface of the cores should have a positive charge as high as possible. If one for example starts with silica soles as cores one must take into account the fact that the surface of the particles are negatively charged at pH larger than the zero charge point of the silica particles which correspond to a pH of 1,8-2,0. One can of course let the adsorption of negatively charged species of colourants occur at a low pH that is lower than 1,8 where the surface of the particles are positively charged, but partly the positive charge of the particle surface does not increase very much with reduced pH and partly the colorant can be influenced or even be broken down at these low pH values. It is therefore more practical to work at a pH which is higher than 2 and bring about the strongly positive charge on the surface of the particles by reversing the surface charge from negative to positive by means of a positively charged agent. Such positively charged agents can be solutions of basic salts of aluminium or chrome. Other positively charged agents are cationic polymers, for instance polymers which contain quarternary ammonium groups. If one starts with polymer particles as cores to adsorb species of anionic colourants one must use emulsifying agents when polymerizing latex particles which give these a positive charge. If one instead prefer to start from polymer particles which have been polymerized with emulsifiers that give the surface of the particles a negative charge this charge must be reversed to positive by using a positively charged agent.

### The film

The film on pigments according to the present invention consists of metal oxide, preferably amorphous silica which is bound to the covering layer of colorant adsorbed on the surface of the core. The surface of for instance amorphous silica is sealed and hydrated. This film has all the properties which is connected to amorphous silica. It has a low solubility in water and is insoluble in most organic solvents. The surface of the film contains OH-groups, so called silanole groups and is therefore hydrophile. Due to these groups being reactive they can be used to modify the surface of the film so that it becomes organophile. In the same way as for silica soles the charge of the film is dependent on pH and it is negative at pH above 2. The surface of the film can therefore also be made organophile by adsorbing cationic tensides on it. Due to the properties of the film and the possibilities to modify its surface pigments according to the present invention can be dispersed in water as well as in organic solvents.

The thickness of the film can vary within wide limits. To be able to call it a film, that is a sealed coherent film on the adsorbed layer of colorant, the film must consist of at least 1-10 layers of molecules of metal oxide, for instance silica SiO₂ which corresponds to a thickness of about 1-2 nm. The main object of the film is to protect the layer of colorant adsorbed on the surface so that the pigment will not bleed when it is dispersed in different media. The pigment particles according to the present invention will from a chemical point of view be regarded by the surrounding as particles of silica and have the properties of such particles with regard to solubility, dispersibility, stability against precipitation, flocculation, e t c. Other metal oxides which can be used as a film according to the present invention is aluminium oxide or aluminium silicate.

### Application of the film on adsorbed layers of colorant

When using silica as film this is deposited on surface of the colorant from a super saturated solution of monomer silica with a velocity that increases with the degree of super saturation. As depositing of silicic acid of the surface of the layer of colorant is a condensation-polymerization reaction it is catalyzed by hydroxilions and the deposition is always carried out at pH above 8.

The critical step at the application of the film is the forming of the first very thin film of silica on the surface of adsorbed colorant. To have this film being formed the surface of the adsorbing colorant layer must be receivable for silica in different degrees. Such, anionic colourants can be made more receivable for silica by adsorbing polycationes of aluminium or chromium or cationic tensides such as water soluble polymers containing quarternary ammonium groups on the surface of the colorant layer before the deposition of the silica is started.

A convenient and practical source for silica which can be used for forming a film according to the present invention is alkali water glass, for instance sodium water glass in a ratio of 1-3,3 (ratio = SiO₂/Na₂O). This can be used to apply a film by first making a mixture of water and alkali water glass and particles consisting of cores having an adsorbed covering layer of colorant. Hereby one must keep the concentration of alkali ions so low that the ions do not cause coagulation or precipitation of the particles. The pH of the mixture is typically between 11 and 12, preferably between 11,0 and 11,7. Diluted acid, for example hydrochloric acid, is added until the pH has come down to 9-10. At the acidification monomer silicium acid is formed which forms a film on the layer of adsorbed colorant. The speed of addition of acid must be so low that colloidal silicium acid does not have time to be formed. The maximal addition velocity of acid depends on the temperature and the surface of the particles, that means the surface of cores plus adsorbed layer of colorant in the mixture.

So called "active silica", that means a decationized solution of sodium water glass can also be used to apply a film. The small particles of SiO₂ having a diameter less than 2 nm in the eluate from the ion exchanger has relatively high solubility and when they suddenly are introduced in the system consisting of a mud of cores having adsorbed layers of colorant at pH 8-10 the system will be oversaturated with monomer silicic acid which is deposited on the surface on the particles, which means on the layer of the colorant. Addition of active silica must be carried out so slowly that the monomer silicium acid formed has time to diffuse to neighbouring particles and be deposited on their surface instead of forming cores of silica which rapidly should grow to silica particles of colloidal size. The maximal addition velocity of active silica depends on pH, temperature and surface of the particles, that means the surface of cores plus adsorbed layer of colorant in the mud.

### Cores having alternating layers of colorant and film

Pigments according to the present invention can be manufactured with more layers consisting of alternating layers of colorant and film. The uppermost layer consists always of a film of metal oxide, preferably silica. When a film is applied on the first layer of colorant following layers of colorant is added and film in the same way as is used to apply the first layers of colorant and film. Intermediate layers of films can be made very thin as they are not subjected to demanding environments when pigments according to the present invention are used.

Thicker layers of colorant can also be applied on the core by a multistage process before the film is deposited. Thick layers of cationic colourants can be obtained in that after the adsorption of the first layer of colorant, whereby the particles consisting of cores plus adsorbed layer of colorant has a positively charged surface, reverse the charge of the surface to negative by adsorption of a negatively charged agent such as silicate ions from an alkali silicate solution or a water soluble anionic polymer. This process is repeated until a layer of colorant of desired thickness has been applied on the core before depositing of the film is started. Thick layers of anionic colourants can be obtained in that after adsorption of the first layer of colorant whereby the particles consisting of cores plus adsorbed layer of colorant has a negatively charged surface reverse the charge of the surface to positive by adsorption of a positively charged agent such as polycations of aluminium or chromium or a water soluble cationic polymer before depositing of the film of preferably silica is started.

### Characterizing methods

Two factors which to a great extent influence the properties of pigment according to the present invention are the particle size and the distribution of the particle size. To measure the particle size and the distribution of particle size we have used an instrument called Malvern Z-sizer IIc (Malvern Instruments Ltd.) which measures these properties by means of dynamically spreading of laser light.

A condition for a colloidal suspension to be stable is that the particles are repelling each other in that they have the same and sufficiently large electrostatic charge on the surface. With reduced charge the risk for aggregating through coagulation is increased. The size and the kind of charge at the effective border surface between particles and surrounding medium, the z-potential, for pigments and cores according to the present invention was also measured by means of the instrument Malvern Z-sizer IIc (Malvern Instruments Ltd.). Before measuring the particles were dispersed in a 10 mM solution of NaCl.

The Z-potential is defined as the electric potential in the electric double layer around a particle at a distance which is equal to the thickness of the immobile liquid layer around the particle.

The invention shall in the following be described by means of some embodiment examples. These may however not be regarded as being limiting to the invention.

### Example 1

350 millilitre of a water solution containing 0,325 gramme methylene blue per 100 millilitre was poured into a glass receptacle and pH was adjusted to 10,5 by the addition of 0,2 m NaOH. Dropwise and under vigorous stirring 75 millilitre of a silica sole solution containing silica particles having a middle size of 259 nm, a Z-potential of -70 mV and a silica content of 0,20 gramme SiO₂ per gramme solution was added. The addition was carried out during 12 minutes dropwise to a whirl of the stirred colorant solution. After completed addition pH was measured in the resulting solution to 9,9 and the Z-potential of the particles to +38 mV. To remove excess of colorant sole particles having adsorbed colorant was separated from the solution by centrifugation. The supernatant was decanted of and the sole (the solid phase) was dispersed in 425 millilitre distilled water in an ultrasound bath. This procedure was repeated once whereupon only a very small part of the total amount of colorant in the system was present in solution whereas the main part of the colorant was on the surface of the sole particles in the shape of a completely covering adsorbate. This was shown therethrough that one by centrifugation of a sample of the resulting solution obtained a clear phase which was light blue coloured whereas the solid phase (the sole particles having adsorbed colorant) was intensive blue.

A sample of the sole solution containing particles having adsorbed colorant was heated to 100°C during 10 minutes whereby the adsorbed colorant was desorbated which was shown at a succeeding centrifugation in that almost all colorant was in solution whereas the solid phase was practically uncoloured.

A sample of the sole solution containing particles having adsorbed colorant was separated by centrifugation. The intensively blue coloured solid phase was dispersed in methanol whereby the adsorbed colorant was desorbed which appeared therethrough that at a succeeding centrifugation almost all colorant was present in solution whereas the solid phase was practically uncoloured.

50 millilitre 3,3 ratio sodium silicate, 0,20 M calculated on Na, was poured into a 200 millilitre glass receptacle. 40 millilitre of a sole solution was produced according to the above containing silica particles having a small particle size distribution around 259 nm with an adsorbed layer of methylene blue and washed two times by separation with centrifugation followed by redispersing in distilled water, was added dropwise and under vigorous stirring to the sodium silicate solution during a period of time of approximately 30 minutes. After these additions pH was measured to 11,50 and the Z-potential of the particles to -60 mV. The resulting solution containing silicic acid particles having an adsorbed layer of colorant and natrium silicate was transferred to a 200 millilitre E-flask and heated to 50°C. This temperature was maintained and 0,20 M hydrochloric acid was added at a speed of approximately 1 millilitre per hour until a pH of 9,8 had been obtained. During this lowering of pH a sealed film of amorphous silica was formed on the adsorbed colour layer.

A sample of this pigment solution was heated to 100°C during 10 minutes which did not result in desorption of the colorant which was shown through that at a succeeding separation by centrifugation almost all colorant was present bound to the solid phase which was intensive blue-violet whereas the liquid phase was practically uncoloured.

Another sample of the same pigment dispersion was separated by centrifugation. The intensively coloured solid phase was dispersed in methanol which neither resulted in any desorption of the colorant which could be seen through that at a succeeding centrifugation all colourants present were bound to the particles, the solid phase which was intensive blue-violet, whereas the liquid phase was uncoloured.

### Example 2

35 millilitre of a water solution of methylene blue containing 0,325 gramme methylene blue per 100 millilitre solution was poured in a 100 millilitre glass receptacle and pH adjusted to 10,5 by means of 0,20 M NaOH. Slowly and under vigorous stirring 15 millilitre of a dispersion of kaolin containing 20% by weight kaolin and 0,20% by weight (SiO₂) Na-water glass (3,3 ratio) calculated on kaolin, as a dispersion agent, was added to the colorant solution. The resulting dispersion containing kaolin particles having an adsorbed layer of colorant had a pH of 6,6 and the particles Z-potential was measured to +15 mV.

100 millilitre of a potatium silicate solution (3,3 ratio, 0,20 M K) was poured in a 250 millilitre glass receptacle. To this solution was added slowly and under vigorous stirring the dispersion containing kaolin particles with adsorbed colorant. The resulting dispersion had a pH of 11,7 and the particles Z-potential was measured to -50 mV. This dispersion was heated to 70°C and pH lowered to 9,5 through slow (about 1 millilitre per h) addition of 0,20 M HCl. The resulting pigment consisting of kaolin particles having an adsorbed layer of colorant covered by a film of amorphous silica was washed three times by separation with centrifugation followed by redispersing in distilled water by means of a ultrasound bath. After the third wash the liquid phase was practically uncoloured whereas the solid phase which was the pigment was intensive blue-violet.

### Example 3

35 millilitre of a water solution of methylene blue containing 0,325 gramme methylene blue per 100 gramme solution was poured into a 100 millilitre glass receptacle and pH was adjusted to 10,5 by means of a 0,20 M NaOH. Slowly and under vigorous stirring 30 millilitre of a dispersion of attapulgite, comprising 10% by weight attapulgite and 0,20% by weight (SiO₂) Na-waterglass (3,3 ratio), calculated on attapulgite, as dispersion agent, was added to the colorant solution. In the resulting dispersion containing attapulgite particles having an adsorbed layer of colorant the Z-potential of the particle was measured to +15 mV.

100 millilitre of a potatium silicate solution (3,3 ratio, 0,20 M K) was poured into a 250 millilitre glass receptacle. To this solution slowly and under vigorous stirring the dispersion containing attapulgite particles having adsorbed colorant was added. The resulting dispersion had a pH of 11,7 and the particles Z-potential was measured to -50 mV. This dispersion was heated to 70°C and pH lowered to 9,5 by slow (about 1 millilitre per h) addition of 0,20 M HCl. The resulting pigment consisting of attapulgite particles having an adsorbed layer of colorant covered by a film of amorphous silica was washed three times by separation with centrifugation followed by redispersing in distilled water by means of a ultrasound bath. After the third wash the liquid phase were practically uncoloured whereas the solid phase which consisted of the pigment was intensive blue-violet.

### Example 4

50 millilitre of 3,3 ratio sodium silicate solution, 0,20 M Na was poured into a 200 millilitre glass receptacle. 40 millilitre of sole solution was produced according to example 1 containing silica particles having a narrow particle size distribution about 50 nm with an adsorbed layer of methylene blue and washed two times by separation with centrifugation followed by redispersing in distilled water, was added dropwise and under vigorous stirring to the sodium silicate solution during a period of time of about 30 minutes. After this addition pH was measured to 11,50 and the particles Z-potential to -60 mV. The resulting solution containing silica particles having an adsorbed layer of colorant and sodium silicate was transferred to a 200 millilitre E-flask and heated to 50°C. While maintaining this temperature and at a velocity of approximately 1 millilitre per hour, 0,20 M hydrochloric acid was added until a pH of 9,8 had been obtained. During this lowering of pH a sealed film of amorphous silicium acid was formed on the adsorbed colorant layer.

One sample of this pigment solution was heated to 100°C during 10 minutes which did not result in desorption of colorant which was shown in that at a succeeding separation by centrifugation almost all colorant present was bound to the solid phase which was intensive blue-violet whereas the liquid phase was practically uncoloured.

Another sample of the same pigment solution was separated by centrifugation. The intensively coloured solid phase was dispersed in methanol which neither resulted in any desorption of the colorant which could be verified therethrough that by a succeeding centrifugation all colorant present was bound to the particles, the solid phase, which was intensive blue-violet, whereas the liquid phase was uncoloured.

### Example 5

50 millilitre 3,3 ratio sodium silicate solution, 0,20 M Na, was poured into a 200 millilitre glass receptacle. 40 millilitre of a sole solution produced in accordance with example 1 containing polystyrene particles having a small narrow particle size distribution about 100 nm with an adsorbed layer of methylene blue and washed two times by separation with centrifugation followed by redispersing in distilled water was added dropwise and under vigorous stirring to the sodium silicate solution during a period of time of approximately 30 minutes. After this addition pH was measured to 11,50 and the particles Z-potential -60 mV. The resulting solution containing polystyrene particles having an adsorbed layer of colorant and Na-silicate was transferred to a 200 millilitre E-flask and heated to 50°C. When maintaining this temperature and at a speed of about 1 millilitre per hour, 0,20 M hydrochloric acid was added until a pH of 9,8 had been obtained. During this lowering of pH a sealed film of amorphous silica was formed on the adsorbed colorant layer.

A sample of this pigment solution was heated to 100°C during 10 minutes which did not result in any desorption of the colorant which was shown therethrough that at a succeeding separation through centrifugation almost all colorant present was bound to the coloured phase which was intensive blue-violet whereas the liquid phase was practically uncoloured.

Another sample of the same pigment solution was separated by centrifugation. The intensively coloured solid phase was dispersed in methanol which neither resulted in any desorption of the colorant which could be verified in that at a succeeding centrifugation all colourants present was bound to the particles, the solid phase, which was intensive blue-violet, whereas the liquid phase was uncoloured.

### Example 6

50 millilitre 3,3 ratio sodium silicate solution, 0,20 M Na, was poured into a 200 millilitre glass receptacle. 40 millilitre of a sole solution produced in accordance with example 1 containing particles of polymethylmethachrylate (PMMA) having a narrow particle size distribution about 200 nm with an adsorbed layer of methylene blue and washed two times by separation with centrifugation followed by redispersing in distilled water was added dropwise and under vigorous stirring to the sodium silicate solution during a period of time of approximately 30 minutes. After this addition pH was measured to 11,50 and the particles Z-potential to -60 mV. The resulting solution containing (PMMA) particles having an adsorbed layer of colorant and Na-silicate was transferred to a 200 millilitre E-flask and heated to 50°C. While maintaining this temperature and at a speed of about 1 millilitre per hour, 0,20 M hydrochloric acid was added until a pH of 9,8 had been obtained. During this lowering of pH a sealed film of amorphous silica acid was formed on the adsorbed colorant layer.

A sample of this pigment solution was heated to 100°C during 10 minutes which did not result in any desorption of the colorant which was shown therethrough that at a succeeding separation by centrifugation almost all colorant present was bound to the solid phase which was intensive blue-violet whereas the liquid phase was practically uncoloured.

Another sample of the same pigment solution was separated by centrifugation. The intensively coloured phase was dispersed in methanol which neither resulted in any desorption of the colorant which could be verified in that at a succeeding centrifugation all colourants present was bound to the particles, the solid phase, which was intensive blue-violet, whereas the liquid phase was uncoloured.

### Example 7

350 millilitre of a water solution containing 0,325 gramme Astrazon Rot BBL, a red cationic colorant from Bayer, per 100 millilitre was poured into a 1 litre glass receptacle and pH was adjusted to 10,5 by the addition of 0,5 M NaOH. Dropwise and under vigorous stirring 75 millilitre of a silica sole containing silica particles having a middle size of 262 nm, a z-potential of -76 mV and a silica content of 0,24 gramme of SiO₂ per gramme solution was added. The addition was carried out during 12 minutes dropwise to vortex of the stirred colorant solution. After completed addition pH was measured on the resulting solution to 10,0 and the particles z-potential to +58 mV. To remove excess colorant sole particles having adsorbed colorant was separated from the solution by centrifugation. The supernatant was decanted and the sole (the solid phase) was dispersed in 425 millilitre distilled water in an ultrasound bath. This procedure was repeated once whereupon only a very small part of the total amount colorant in the system was present in solution whereas the main part of the colorant was on the surface of the sole particles as a completely covering adsorbate. This was shown in that one by centrifugation of a sample of the resulting solution obtained a clear phase which was slightly red whereas the solid phase (the sole particles with adsorbed colorant) was intensive red.

50 millilitre 3,3 ratio potassium silicate solution, 0,20 M K, was poured into a 200 millilitre glass receptacle.

40 millilitre of the sole solution produced according to the above containing silica particles having a narrow particle size distribution around 262 nm with an adsorbed layer of red, cationic colorant and washed two times by separation with centrifugation followed by redispersing in distilled water was added dropwise and under vigorous stirring to the potassium silicate solution during a period of time of about 30 minutes. After this addition pH was measured to 11,49 and the particles z-potential to -70 mV. The resulting solution contained silica particles with an adsorbed layer of colorant and K-silicate was transferred to a 200 millilitre E-flask and heated to 50°C. While maintaining this temperature and at a speed of about 1 millilitre per hour, 0,20 M hydrochloric acid was added until a pH of 9,8 had been obtained. During this lowering of pH a sealed film of amorphous silica was formed on the adsorbed colorant layer.

A sample of this pigment solution was heated to 100°C during 10 minutes which did not result in desorption of the colorant which was shown therethrough that at a succeeding separation through centrifugation practically all colorant present was bound to the solid phase which was intensive red whereas the liquid phase was practically uncoloured.

Another sample of the same pigment solution was separated through centrifugation. The intensively coloured solid phase was dispersed in methanol which neither resulted in any desorption of the colorant which could be verified in that at a succeeding centrifugation all colourants present was bound to the particles, the solid phase, which was intensive red, whereas the liquid phase was uncoloured.

### Example 8

350 millilitre of a water solution containing 0,325 gramme Astrazon Gelb 7GLL, a yellow cationic colorant from Bayer, per 100 millilitre was poured into a 1 litre glass receptacle and pH was adjusted to 10,5 by the addition of 0,2 M NaOH. Dropwise and under vigorous stirring 75 millilitre of a silica sole containing silica particles having a middle size of 262 nm, a z-potential of -76 mV and a silica content of 0,24 gramme SiO₂ per gramme solution was added. The addition was carried out during 12 minutes dropwise to vortex of the stirred colorant solution. After completed addition pH was measured on the resulting solution to 10,0 and the particles z-potential to +58 mV. To remove the excess of colorant sole particles with adsorbed colorant was separated from the solution by centrifugation. The supernatant was decanted and the sole (the solid phase) was dispersed in 425 millilitre distilled water in an ultrasound bath. This procedure was repeated once whereupon only a very small part of the total amount colorant in the system was present in solution whereas the main part of the colorant was on the surface of the sole particles in the shape of a completely covering adsorbate. This was shown in that one by centrifugation of a sample of the resulting solution obtained a clear phase which was weakly yellow coloured whereas the solid phase (the sole particles with adsorbed colorant) was intensive yellow.

50 millilitre 3,3 ratio potassium silicate solution, 0,20 M K, was poured into a 200 millilitre glass receptacle. 40 millilitre of a sole solution produced according to the above containing silica particles having a narrow particle size distribution about 262 nm with an adsorbed layer of yellow, cationic colorant and washed two times by separation with centrifugation followed by redispersion in distilled water was added dropwise and under vigorous stirring to the potassium silicate solution during a period of time of about 30 minutes. After this addition pH was measured to 11,49 and the particles z-potential to -70 mV. The resulting solution contained silica particles with an adsorbed layer of colorant and K-silicate was transferred to a 200 millilitre E-flask and heated to 50°C. While maintaining this temperature and at a speed of about 1 millilitre per hour, 0,20 M hydrochloric acid was added until a pH of 9,8 had been obtained. During this lowering of pH a sealed film of amorphous silica was formed on the adsorbed colorant layer.

A sample of this pigment solution was heated to 100°C during 10 minutes which did not result in any desorption of the colorant which was shown therethrough that at a succeeding separation through centrifugation practically all colorant present was bound to the solid phase which was intensive yellow whereas the liquid phase was practically uncoloured.

Another sample of the same pigment solution was separated by centrifugation. The intensively coloured solid phase was dispersed in methanol which neither resulted in any desorption of the colorant which could be verified therethrough that at a succeeding centrifugation all colourants present was bound to the particles, the solid phase, which was intensive yellow, whereas the liquid phase was uncoloured.

### Example 9

15 millilitre of a solution containing 0,2 weight percent water soluble cationic polymer was poured into a 50 millilitre glass receptacle. 15 millilitre silicic acid sole containing particles having a narrow particle size distribution centred at 262 nm and having a content of 0,24 gramme SiO₂ per gramme sole was added to the polymer solution slowly and under vigorous stirring. To remove the excess of polymer the sole was separated by centrifugation whereupon the clear liquid phase was decanted off and the solid phase consisting of silica particles with adsorbed cationic polymers was dispersed in distilled water. The obtained recharged silica sole had a z-potential of +78 mV.

120 millilitre of a solution of Supranol Brilliantrein Blau G:W (Bayer) containing 0,325 gramme anionic colorant per 100 millilitre solution was poured into a 200 millilitre glass receptacle. To this solution was added slowly and under vigorous stirring the silica sole which was recharged with the cationic polymer. The resulting dispersion consisting of recharged silica particles having a layer of adsorbed colorant was separated by means of centrifugation. The liquid phase was decanted off and the solid phase dispersed in 60 millilitre distilled water. The z-potential for the particles in this dispersion was measured to -49 mV. 6 millilitre of a solution of aluminium chlorohydrate (Locron L, Hoechst, 23,3 weight percent of Al₂O₃) containing polyaluminium cations was diluted to 45 millilitre with distilled water. To this solution was added slowly and under vigorous stirring the dispersion containing recharged silica particles with an adsorbed layer of colorant. This resulted in adsorption of polyaluminium cations on the surface of the colorant layer and consequently in a recharge of the sole which after centrifugation and redispersion of the solid phase in 80 millilitre water had the z-potential of +64 mV. 50 millilitre 3,3 ratio potassium silicate solution, 0,20 M with relation to K was poured into a 250 millilitre glass barrel. To this solution was added slowly and under intensive stirring the above described sole having been recharged by polyaluminium cations. pH in the resulting dispersion was lowered to 9,7 by a slow addition of 0,20 M HCl.

The resulting pigment consisted accordingly of silica particles having an adsorbed layer of anionic colourants covered by a film of amorphous silica.

### Example 10

15 millilitre of a solution containing 0,2 weight percent water soluble cationic polymer was poured into a 50 millilitre glass receptacle. 15 millilitre silica sole containing particles having a narrow particle size distribution centred at 262 nm and with a content of 0,24 gramme SiO₂ per gramme sole was added to the polymer solution slowly and under vigorous stirring. To remove the excess of polymer the sole was separated by centrifugation whereupon the clear liquid phase was decanted off and the solid phase consisting of silica particles with adsorbed cationic polymers was dispersed in distilled water. The obtained recharged silica sole had a z-potential of +78 mV.

120 millilitre of a solution of Supranol Brilliantrot 3BW (Bayer) containing 0,325 gramme anionic colorant per 100 millilitre solution was poured into a 200 millilitre glass receptacle. To this solution was added slowly and under intensive stirring the silica sole which had been recharged with the cationic polymer. The resulting dispersion consisting of recharged silica particles having a layer of adsorbed colorant was separated by means of centrifugation. The liquid phase was decanted off and the solid phase dispersed in 60 millilitre distilled water. The z-potential for the particles in this dispersion was measured to -49 mV. 6 millilitre of a solution of aluminium chlorohydrate (Locron L, Hoechst, 23,3 weight percent of Al₂O₃) containing polyaluminium cations was diluted to 45 millilitre with distilled water. To this solution was added slowly and under vigorous stirring the dispersion containing recharged silica particles with an adsorbed layer of colorant. This resulted in adsorption of polyaluminium cations on the surface of the colorant layer and consequently in a recharge of the sole which after centrifugation an redispersion of the solid phase in 80 millilitre water had the z-potential of +64 mV. 50 millilitre 3,3 ratio calcium silicate solution, 0,20 M with relation to K was poured into a 250 millilitre glass receptacle. To this solution was added slowly and under intensive stirring the above described sole which was recharged by polyaluminium cations. pH in this resulting dispersion was lowered to 9,7 by slow addition of 0,20 M HCl.

The resulting pigment consisted consequently of silica particles having an adsorbed layer of anionic colourants covered by a film of amorphous silicic acid.

### Example 11

Step 1: 12 millilitre of a solution of methylene blue containing 0,325 gramme methylene blue per 100 millilitre was poured into a 50 millilitre glass receptacle and pH was adjusted to 10,5 by means of 0,20 M NaOH. 15 millilitre of a silica sole containing silica particles having a narrow particle size distribution centred at 262 nm and a silica content of 0,24 gramme SiO₂ per gramme solution was added dropwise and under vigorous stirring to the colorant solution. After completed addition pH was measured in the resulting solution to 10,1 and the Z-potential of the particles to +0,34 mV. 20 millilitre Na-silicate solution (3,3 ratio, 0,10 M Na) was poured into a 100 millilitre glass receptacle. To this solution was the above described silica sole having an adsorbed layer of colorant added slowly and under vigorous stirring. The resulting dispersion was heated to 65°C and pH was lowered to 9,5 by addition of 0,20 M HCl (1,4 millilitre/h). The resulting pigment consisting of particles of silica having a layer of adsorbed colorant covered by a film of amorphous silica was separated by centrifugation and the solid phase dispersed in 12 millilitre distilled water in an ultrasound bath.
Step 2: This step was performed in the same way as step 1 with the difference that the pigment that was produced in step 1 was used as starting material instead of a silica sole.
Step 3: This step was performed as step 1 and 2 with the differences that pigment from step 2 was used as starting material and that 40 millilitre Na-silicate solution (3,3 ratio, 0,10 M Na) was used instead of 20 millilitre to build up a thicker outer film of amorphous silica.

The resulting pigment consisted consequently of three layers of adsorbed colorant separated by films of amorphous silica and with a thicker outer film of amorphous silica.

### Example 12

Step 1: 12 millilitre of a solution of methylene blue containing 0,325 gramme methylene blue per 100 ml was poured into a 50 millilitre glass receptacle and pH was adjusted to 10,5 by means of 0,20 M NaOH. 15 millilitre of a silica sole containing silica particles with a narrow particle size distribution centred at 262 nm and with a silica content of 0,24 gramme SiO₂ per gramme solution was added dropwise and under vigorous stirring to the colorant solution. After completed addition pH was measured in the resulting solution to 10,1 and the particles z-potential to +34 mV. 20 millilitre Na-silicate solution (3,3 ratio, 0,10 M Na) was poured into a 100 millilitre glass receptacle. To this solution was added the above described silica sole having an adsorbed layer of colorant slowly and under vigorous stirring. This resulted in adsorption of negatively charged silicate ions on the surface of the colorant layer which after separation by means of centrifugation and redispersion in distilled water had a z-potential of -40 mV.
Step 2: This step was performed in the same way as step 1 with the difference that the sole which was produced in step 1 containing silica particles having a layer of adsorbed colorant recharged by means of silicate ions and washed to remove excess of these, was used as starting material instead of a silica sole.
Step 3: This step was performed as steps 1 and 2 with the difference that the sole from step 2 was used as starting material and that 40 millilitre Na-silicate solution (3,3 ratio, 0,10 M Na) was used instead of 20 millilitre. This step was further not terminated with centrifugation but instead an excess of silica ions was used to build up a film of amorphous silica on the colour layer. This was made by first heating the dispersion to 50°C and thereafter lower pH to 9,7 by addition of 0,20 M HCl at a speed of about 1 millilitre per h.

The resulting pigment consisted consequently of silica particles having a three times as thick layer of adsorbed cationic colorant compared with the one in example 2 described pigment covered by a film of amorphous silica.

### Example 13

Step 1: 15 millilitre of a solution containing 0,2 weight percent water soluble cationic polymer was poured into a 50 millilitre glass receptacle. 15 millilitre silica sole containing particles having a narrow particle size distribution centred at 262 nm and with a content of 0,24 gramme SiO₂ per gramme sole was added to the polymer solution slowly and under vigorous stirring. To remove excess polymer the sole was separated by centrifugation whereupon the clear liquid phase was decanted off and the solid phase consisting of silica particles having an adsorbed cationic polymer was dispersed in distilled water. The obtained recharged silica sole had a z-potential of +78 mV.
   120 millilitre of a solution of Supranol Brilliantrein GL W (Bayer) containing 0,325 gramme anionic colorant per 100 millilitre solution was poured into a 200 millilitre glass receptacle. To this solution was added slowly and under intensive stirring the silica sole which had been recharged by a cationic polymer. The resulting dispersion consisting of recharged silica particles having a layer of adsorbed colorant was separated by means of centrifugation. The liquid phase was decanted off and the solid phase was dispersed in 60 millilitre distilled water. The z-potential for the particles in this dispersion was measured to -49 mV.
Step 2: Step 2 was performed in the same way as step 1 but instead of silica sole the in step 1 produced sole consisting of recharged silica particles having an adsorbed layer of anionic colorant was used as starting material.
Step 3: Step 3 was performed in the same way as step 2 with the in step 2 produced sole as starting material.
Step 4: 6 millilitre aluminiumchlorohydrate solution (Loctron L, Hoechst, 23,3 weight percent Al₂O₃) containing polyaluminiumcations was diluted to 45 millilitre with distilled water. To this solution the dispersion containing silica particles having a thick adsorbed layer of anionic colorant from step 3 was added slowly and under vigorous stirring. This resulted in adsorption of polyaluminiumcations on the surface of the colorant layer and consequently in a recharge of the sole which after centrifugation and redispersion of the solid phase had a z-potential of +64 mV.
Step 5: 40 millilitre of 3,3 ratio potassium waterglass, 0,10 M with relation to K was poured into a 100 millilitre glass receptacle. To this solution the, according to step 4, produced dispersion was added slowly and under vigorous stirring whereupon pH was lowered to 9,7 by slow addition of 0,20 M HCl.

The resulting pigment consisted accordingly of silica particles having a three times as thick layer of adsorbed anionic colorant compared to the in example 10 described pigment covered by a film of amorphous silica.

The invention is not limited to the embodiment examples shown and it can be modified in different ways within the scope of the claims. Thus one can as colorant imagine complex ions of transission metals such as iron, cobalt, nickel, chromium, copper, e t c having ligands of the type cyanide (CN-), ammonium (NH₃), rhodanide (CNS⁻) e t c. As opticle transparent film one can imagine a polymer of organic monomers.

## Claims

1. Pigment having a composite structure,
**characterized** in that it comprises a core (1) consisting of inorganic or organic material which is insoluble in water but which does net consist of mica and has a size of < 2000 nm and which is covered by one or more layers (2) of water soluble organic or metal organic colourants each of which in turn is covered by a sealed optically transparent film (3) having a thickness of up to 25 nm which has a low solubility in water and is insoluble in most organic solvents.

2. Pigment according to claim 1,
**characterized** in several alternating layers (2) of colorant and optically transparent films (3).

3. Pigment according to the claims 1 or 2,
**characterized** in that the core (1) consists of silica, organic polymers, kaolin, attapulgite, böhmite, bayerite or gibbsite.

4. Pigment according to the clams 1-3,
**characterized** in that the colorant (2) is cationic, water soluble and contains chromophore groups of the type azo, tiazolazo, antrachinone, triarylmethane, metine, thiazine, oxazine, achridine or chinoline.

5. Pigment according to any of the claims 1-4,
**characterized** in that the film(s) (3) are sealed and coherent and consist of metal oxide, selected from aluminium oxide, aluminium silicate or amorphous silica.

6. Process for production of pigments according to any of the claims 1-5, **characterized** in that to a dispersion of charged core particles (1) consisting of inorganic or organic material which is insoluble in water but which are not mica and have a size of < 2000 nm, at least a portion of charged units of a water soluble organic or metal organic colorant having opposite charge to the one of the core particles is added in water, whereupon a film (3) having a thickness of up to 25 nm and preferably 1-2 nm, is deposited on the particles by precipitation of an added film forming agent after the colorant covering (2), the film has a low solubility in water and is insoluble in most organic solvents.

7. Process according to claim 6,
**characterized** in that the charge of the core particles (1) if necessary, is reversed before and/or between the addition of the portion of colorant and before the deposition of a film (3).

8. Process according to claims 6 or 7,
**characterized** in that a film (3) is deposited between each portion of colorant.

9. Process according to the claims 6-8,
**characterized** in that the film forming material consists of alkali silicate and that the film (3) is precipitated on the particles by lowering the pH of the mixture after the addition of alkali silicate from 11-12 to 9-10 by the addition of an acid.

10. Process according to any of the claims 6-8,
**characterized** in that the film forming material consists of deionized alkali silicate and that the film (3) is deposited on the particles by the simultaneous addition of deionized alkali silicate and alkali hydroxide to the dispersion of particles at such velocities that pH is maintained at 8-11, preferably 9-10.

## Patentansprüche

1. Pigment mit zusammengesetzter Struktur,
dadurch gekennzeichnet,
daß es umfaßt einen Kern (1), bestehend aus anorganischem oder organischem Material, das unlöslich in Wasser ist, jedoch nicht aus Glimmer besteht und eine Größe von < 2000 nm hat und der bedeckt ist von einer oder mehreren Schichten (2) aus wasserlöslichen organischen oder metallorganischen Färbemitteln, von welchen jede ihrerseits bedeckt ist von einem dichten optisch transparenten Film (3) mit einer Dicke von bis zu 25 nm, der eine niedrige Löslichkeit in Wasser aufweist und in den meisten organischen Lösungsmitteln unlöslich ist.

2. Pigment nach Anspruch 1,
gekennzeichnet durch verschiedene alternierende Schichten (2) von Färbemitteln und optisch transparenten Filmen (3).

3. Pigment nach Anspruch 1 oder 2,
dadurch gekennzeichnet,
daß der Kern (1) aus Kieselsäure, organischen Polymeren, Kaolin, Attapulgit, Böhmit, Bayerit oder Hydrargillit besteht.

4. Pigment nach den Ansprüchen 1 - 3,
dadurch gekennzeichnet,
daß das Färbemittel (2) kationisch, wasserlöslich ist und chromophore Gruppen vom Typ Azo, Thiazolazo, Antrachinon, Triarylmethan, Metin, Thiazin, Oxazin, Acridin oder Chinolin enthält.

5. Pigment nach einem der Ansprüche 1 - 4,
dadurch gekennzeichnet,
daß der Film bzw. die Filme (3) dicht und cohärent sind und aus einem Metalloxid bestehen, ausgewählt aus Aluminiumoxid, Aluminiumsilikat oder amorpher Kieselsäure.

6. Verfahren zur Herstellung der Pigmente nach einem der Ansprüche 1 - 5,
dadurch gekennzeichnet,
daß zu einer Dispersion von geladenen Kernpartikeln (1), bestehend aus anorganischem oder organischem Material, das unlöslich in Wasser ist, jedoch nicht Glimmer sind und eine Größe von < 2000 nm aufweisen, wenigstens eine Portion von geladenen Einheiten eines wasserlöslichen organischen oder metallorganischen Färbemittels mit zur Ladung der Kernpartikel entgegengesetzter Ladung in Wasser zugegeben werden, worauf ein Film (3) mit einer Dicke von bis zu 25 nm und vorzugsweise 1 bis 2 nm auf die Partikeln niedergeschlagen wird durch Präzipitation eines zugegebenen filmbildenden Mittels nach der Färbemittel-Ummantelung (2), wobei der Film eine niedrige Löslichkeit in Wasser aufweist und unlöslich in den meisten organischen Lösungsmitteln ist.

7. Verfahren nach Anspruch 6,
dadurch gekennzeichnet, daß die Ladung der Kernpartikeln (1), falls erforderlich, vor und/oder zwischen der Zugabe des Färbemittelanteils und vor der Niederschlagung des Films (3) umgekehrt wird.

8. Verfahren nach den Ansprüchen 6 oder 7,
dadurch gekennzeichnet,
daß der Film (3) zwischen jedem Anteil des Färbemittels niedergeschlagen wird.

9. Verfahren nach den Ansprüchen 6 bis 8,
dadurch gekennzeichnet,
daß das filmbildende Material aus Alkalisilikat besteht und daß der Film (3) auf den Partikeln niedergeschlagen wird durch Erniedrigung des pH der Mischung nach der Zugabe von Alkalisilikat von 11 - 12 auf 9 bis 10 durch Zugabe einer Säure.

10. Verfahren nach einem der Ansprüche 6 bis 8,
dadurch gekennzeichnet,
daß das filmbildende Material aus deionisiertem Alkalisilikat besteht und daß der Film (3) auf den Partikeln niedergeschlagen wird durch die gleichzeitige Zugabe von deionisiertem Alkalisilikat und Alkalihydroxid zur Dispersion der Partikeln in einer solchen Geschwindigkeit, daß der pH bei 8 bis 11, vorzugsweise bei 9 bis 10 gehalten wird.

## Revendications

1. Pigment ayant une structure composite, caractérisé en ce qu'il comprend un noyau (1) consistant en une matière inorganique ou organique qui est insoluble dans l'eau, mais qui ne consiste pas en mica et a une taille de moins de 2 000 nm et qui est recouvert par une ou plusieurs couches (2) de colorants organiques ou métallo-organiques solubles dans l'eau qui sont recouvertes à leur tour chacune par un film optiquement transparent étanche (3) ayant une épaisseur de pas plus de 25 nm qui a une faible solubilité dans l'eau et qui est insoluble dans la plupart des solvants organiques.

2. Pigment selon la revendication 1, caractérisé par plusieurs couches de colorant (2) et films optiquement transparents (3) alternés.

3. Pigment selon la revendication 1 ou 2, caractérisé en ce que le noyau (1) consiste en silice, polymères organiques, kaolin, attapulgite, boehmite, bayerite ou gibbsite.

4. Pigment selon les revendications 1-3, caractérisé en ce que le colorant (2) est cationique, soluble dans l'eau et contient des groupes chromophores du type azo, thiazolazo, anthraquinone, triarylméthane, méthine, thiazine, oxazine, acridine ou quinoléine.

5. Pigment selon l'une quelconque des revendications 1-4, caractérisé en ce que le ou les films (3) sont étanches et cohérents et consistent en un oxyde métallique choisi parmi l'oxyde d'aluminium, le silicate d'aluminium et la silice amorphe.

6. Procédé pour la production de pigments selon l'une quelconque des revendications 1-5, caractérisé en ce que l'on ajoute dans l'eau, à une dispersion de particules de noyaux (1) chargées consistant en une matière inorganique ou organique qui est insoluble dans l'eau, mais qui ne sont pas du mica et ont une taille de moins de 2 000 nm, au moins une portion d'unités chargées d'un colorant organique ou métallo-organique soluble dans l'eau ayant une charge opposée à celle des particules de noyaux, après quoi un film (3) ayant une épaisseur de pas plus de 25 nm et de préférence 1-2 nm est déposé sur les particules par précipitation d'un agent filmogène ajouté après la couche de colorant (2), le film a une faible solubilité dans l'eau et est insoluble dans la plupart des solvants organiques.

7. Procédé selon la revendication 6, caractérisé en ce que la charge des particules de noyaux (1) est inversée si nécessaire avant et/ou entre l'addition de la portion de colorant et avant la déposition du film (3).

8. Procédé selon la revendication 6 ou 7, caractérisé en ce qu'un film (3) est déposé entre chaque portion de colorant.

9. Procédé selon les revendications 6-8, caractérisé en ce que la matière filmogène consiste en silicate alcalin et en ce que le film (3) est précipité sur les particules par abaissement du pH du mélange après l'addition de silicate alcalin de 11-12 à 9-10 par addition d'un acide.

10. Procéde selon l'une quelconque des revendications 6-8, caractérisé en ce que la matière filmogène consiste en silicate alcalin désionisé et en ce que le film (3) est déposé sur les particules par addition simultanée de silicate alcalin désionisé et d'hydroxyde alcalin à la dispersion de particules à des vitesses telles que le pH soit maintenu à 8-11, de préférence 9-10.
